# EUROPEAN PATENT SPECIFICATION

(11) **EP 3 771 371 B1**
(45) Date of publication and mention of the grant of the patent: **06.09.2023**
(21) Application number: 19189175.3
(22) Date of filing: 30.07.2019
(51) Int. Cl.: A47J 31/46, A47J 31/44, A47J 31/60

(54) **COFFEE MACHINE DRAINAGE CHANNEL**
KAFFEEMASCHINENABLAUFRINNE
CANAL DE DRAINAGE DE MACHINE À CAFÉ

(43) Date of publication of application: 03.02.2021
(73) Proprietor: BSH Hausgeräte GmbH, 81739 München (DE)
(72) Inventor: Godec, Simon, 3000 Celje (SI); Krumpak, Matic, 3211 Skofja vas (SI); Mesko, Ales, 3240 Smarje pri Jelsah (SI)

(56) References cited:
- EP-A1- 3 415 053
- EP-A1- 3 482 659
- WO-A1-2011/095378
- DE-B3-102017 203 481
- US-A1- 2011 005 407

## Description

The present invention relates to a coffee machine especially a full automatic coffee machine having a housing comprising a housing side part and a housing front part, a water tank, a pump, a brewing unit, a heater, a drip tray and a frothing device for preparing frothed milk or for instance coffee with milk or cappuccino.

From the beginning, coffee beverages have been prepared by passing a measured amount of hot water through a brewing unit which carries a quantity of fresh grounded coffee beans. Upon passing through the filter, the water picks up bean particles, transforming the water into "coffee" for consumption, either alone, or as an ingredient of a further-prepared beverage or drink. The final product may, for example, take the form of a "cappuccino", a beverage which includes both coffee and a quantity of hot frothed milk. Such beverages may of course be prepared manually, but usually are prepared using a somewhat automated coffee machine. Usually in the automated coffee machine, a coffee beverage is prepared using a pressure pump which provides pressurized hot water for injection through the ground coffee beans and into a prepositioned cup through a nozzle. The pump also provides high-pressure steam for generating negative pressure in the milk suction line and for heating to provide hot frothed milk to the prepositioned cup with strictly defined amount of the ingredients in defined order that create demanded by user sort of the coffee beverages. Milk initially is drawn into a milk frothing device from a milk container, such milk container preferably being replaceable and docked with a port provided in the housing. After having produced the desired amount of coffee beverage with milk, the milk suction line and the frothing device, have to be cleaned e.g. by rinsing whole said milk flow path namely the suction milk line, the frothing device, the nozzle.

Document US2011005407 (A1) discloses a beverage preparation machine comprising an apparatus for frothing or heating milk, which apparatus is connected via a milk suction hose to a milk container, and a cleaning apparatus for cleaning the milk suction hose and the apparatus for frothing or heating milk by means of a flushing fluid. The milk can be sucked from the milk container into the apparatus for frothing or heating milk by means of a vacuum which can be generated in the apparatus for frothing or heating milk.; The cleaning apparatus contains a switching valve which can be switched into an operating position in which a milk connection is enabled between the milk container and the apparatus for frothing or heating milk via the milk suction hose and into a flushing position in which a first flushing fluid connection is enabled between a flushing fluid outlet of the beverage preparation machine and the apparatus for frothing or heating milk via a flushing hose, the switching valve switched into the flushing position and the milk suction hose. The valve piston and the spring are arranged [in] a through hole of the flushing hose docking in such a manner that, if no flushing hose is docked into the flushing hose docking, the spring holds the valve piston in a first position in which the valve piston prevents any flow of steam and/or hot water through the flushing hose docking.

Document EP2695555A1 discloses a device which has a milk line that is fluidly connected to a milk froth for drawing a liquid from a reservoir outside of a coffee machine. A cleaning tank is fluidly connected to the milk line and whose inside diameter is only slightly larger than the outer diameter of the milk line. The cleaning tank fluidly connected to the milk line is closed by a reversible shutter. The reversible shutter is comprised of a pair of plug that are arranged corresponding to each other on the cleaning tank and the milk line, respectively. For cleaning purposes, a largely arbitrary water container, for example a coffee cup, is provided under the milk foam nozzle, into which the milk line is inserted. Then the coffee machine dispenses hot water into the water container via the milk foam nozzle. The water is then - as the milk in the milk foam production - sucked from the water tank through the milk line and the hose in the milk foam nozzle and discharged through the discharge opening of the milk foam nozzle back into the water tank. This cycle is repeated several times. In this procedure, however, the milk line, which is still moistened with milk, is inserted into the clean cleaning water, so that the milk foam nozzle has to be cleaned with already contaminated water.

Document DE102012200280A1 discloses a vending machine that has a fresh water tank, a pipe leading from the fresh water tank to an output unit, and a reservoir, particularly a milk container. An outlet end of a supply pipe is connected with the output unit and the inlet end is connected with the reservoir. The venturi geometry is provided in the output unit, by which a suction of liquid from the reservoir by low pressure takes place. A branch line is provided, which branches off between the fresh water tank and the output unit from the pipe. An independent claim is included for a method for cleaning a supply pipe, particularly a milk supply pipe and an output unit, particularly a milk frothing unit of a vending machine. Said vending machine can be provided with an additional arranged at the connection of the milk frothing device in order to effectively prevent unintentional dripping after the actual cleaning process has been completed.

In accordance with a known cleaning technique, washing/cleaning of the paths along which the milk flows is provided by means of a valve, that controlling a hot water or a steam flow during the washing and cleaning operation. The hot water or the steam flows inside the whole path between a milk container and the output nozzle. Since the action of the cleaning not immediate, it is necessary for the hot water or the steam to flow for a certain period of time, therefore resulting in using an defined amount the water. If the part of the milk path along the milk flows is uncompleted, for an instance if a part of the path which is responsible for a suction of milk from the milk container or the milk container is not present, then during cleaning/washing the cleaning water could flood surroundings of the coffee machine, which is unacceptable for a user.

The objective of the present invention is to provide a coffee machine, and more particular an automatic coffee machine which is equipped with a mean that prevents surroundings of the coffee machine from flooding caused by uncontrolled water leaking from the said coffee machine.

In accordance with the present invention, there is provided a full automatic coffee machine, comprising a housing, a water tank, a brewing unit, a heating unit, a drip tray, a frothing device and a port to fluidly connect a milk container to the full automatic coffee machine. The port is arranged in the housing and is used for connecting a milk container with a frothing device to provide the frothing device with milk when the milk container is connected to the port. The milk container is fluidly communicated with the frothing device by a milk suction line. The coffee machine additionally comprises a steam conduit to provide the frothing device with a steam to generate negative pressure inside the milk suction. When the milk container is connected to the port, the milk suction line includes a first tube inserted into the milk container and connected to the port and a second tube connected to the frothing device. The coffee machine also comprises a drainage guiding groove which is arranged on the lateral side of the housing and fluidly connecting the port with the drip tray. Furtherly the drainage guiding groove is at least partially covered by a side wall of the milk container while the milk container is docked with the port.

The present invention provides to a user the full automatic coffee machine having drainage guiding groove that fluidly connects the port and the drip tray, so water which in uncontrolled manner would leak from the port, when the part of the milk suction line is dismounted, namely when the milk container is dismounted, is collected in the drip tray, that is dedicated for collecting wasted water, and which is frequently emptying by a user.

In the preferred embodiment the said drainage guiding groove is equipped with at least one rib, limiting a transverse surface of the drainage guiding groove. Advantageously the coffee machine's drainage guiding groove is equipped with at least one rib, that is arranged at an acute angle α with respect to the axis defined by the drainage guiding groove. Preferable the drainage guiding groove is equipped with two ribs, which are arranged at the angle α between about 50 to 70 degrees with respect to the axis defined by the drainage guiding groove. Thereby the stream of the leaking water is narrowed which has a positive effect for easy directing it to the drip tray through the opening arranged in a retaining wall. Additionally, the inclination of the rib has the positive effect in that the water easily drains from the ribs.

In another preferred embodiment the coffee machine's the drainage guiding groove starts from the port, wherein the port is above the drip tray. Advantageously the drainage guiding groove ends with a retaining wall with an opening arranged in the housing or in the drip tray causes that the drainage guiding groove is fluidly connected with the drip tray. Thereby the leaking water is distributed under gravity through the continuous path from the starting point namely the port to the end, i.e. the drip tray. The drip tray is designed for frequent emptying by the user.

Advantageously the drainage guiding groove on its whole length is in a form of a longitudinal recess arranged vertically in the housing. In another preferred embodiment the drainage guiding groove on its whole length has a fixed width or the width of the drainage guiding groove changes linearly along it length. So, implementation of the said drainage guiding groove doesn't increase size of the housing of the coffee machine and additionally it can be easy covered.

In the preferred embodiment the drainage guiding groove is completely covered by the side wall of the milk container while the milk container is docked with the port. So the side portion of the milk container covers the groove and replace a lid, so there is no need any additional lid to cover the drainage guiding groove, what is cost effective and convenient for the user.

In the another preferred embodiment the drainage guiding groove has a bottom portion which is deviated from the vertical by an angle β, therefore the depth of the drainage guiding groove changes linearly along the axis defined by the drainage guiding groove. At the starting point, at the port is deeper than at the end of the groove at the supporting wall. Preferably ribs are arranged on the bottom. Therefore water leaking from the port flows along the bottom of the drainage guiding groove and does not tend to separate from the bottom and is directed by the rib to the opening and finally to the drip tray.

Further benefits and advantages of the present invention will become apparent after a careful reading of the detailed description with appropriate reference to the accompanying drawings.
Fig. 1 is a perspective view of a full automatic coffee machine with the preferred embodiment of the present invention.
Fig. 2 is a plan view of a front side of a full automatic coffee machine with the preferred embodiment of the present invention as shown in Fig. 1. provided with a milk container.
Fig. 3 is a locally enlarged view of cross-sectional view of the full automatic coffee machine as shown in Fig. 2.
Fig. 4 is a plan view from above of the full automatic coffee machine as shown in Fig. 2.
Fig. 5 is a cross-sectional view of the full automatic coffee machine as shown in Fig. 2

In cooperation with attached drawings, the technical contents and detailed description of the present invention are described thereinafter according to a preferable embodiment, being not used to limit its executing scope.

Reference will now be made to the drawing figures to describe the present invention in detail.

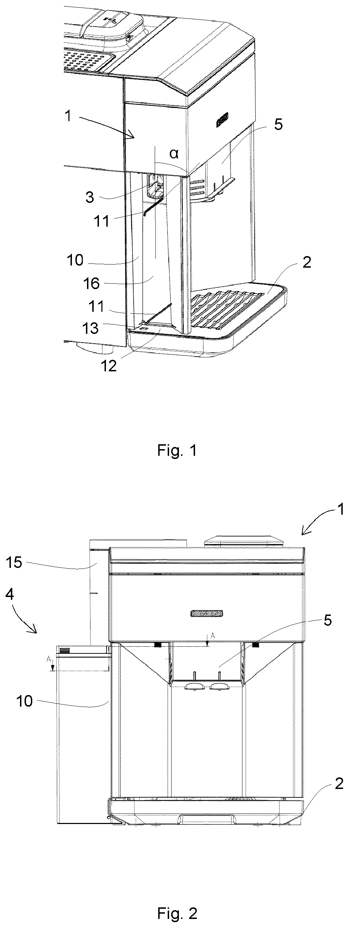

Reference is made to Fig. 1 which is a perspective view of a full automatic coffee machine with the preferred embodiment of the present invention. Full automatic coffee machine, comprising a housing 1, a water tank (not shown on this figure), a brewing unit (not shown on this figure), a heating unit (not shown on this figure), a drip tray 2, a port 3 arranged in the housing 1 for fluidly connecting a milk container 4 (not shown on this figure), and a frothing device 5 by a milk suction line 6 (not shown on this figure). The venturi geometry is provided in the frothing device 5 to generate negative pressure inside the milk suction line 6 by a steam provided to the frothing device 5 within a steam conduit 7 (not shown on this figure). The milk suction line includes a first tube 8 (not shown on this figure) inserted into the milk container 4 and a second tube 9 (not shown on this figure) which is placed in the housing 1 and connected to the frothing device 5. The housing 1 has a drainage guiding groove 10 which is arranged on the lateral side of the housing 1. The Said groove fluidly connecting the port 3 with the drip tray 2. The drainage guiding groove 10 is equipped with two ribs 11, limiting a transverse surface of the drainage guiding groove 10. They are arranged at an angle α at about 60 degrees with respect to the axis defined by the drainage guiding groove 10. Furtherly the drainage guiding groove 10 that on its whole length is in a form of a longitudinal recess arranged vertically in the housing 1, starts from the port 3, and the port 3 is above the drip tray and the drainage guiding groove 10 ends with a retaining wall 12, which has an opening 13 that is fluidly connected with the drip tray the width of the drainage guiding groove 10 changes linearly along the axis defined by the drainage guiding groove 10.

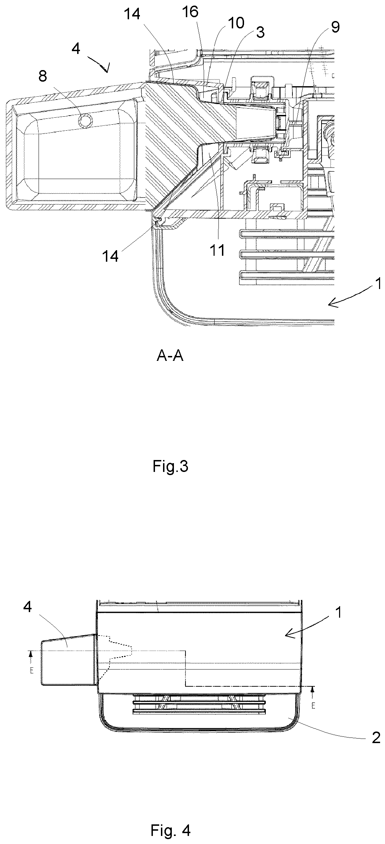

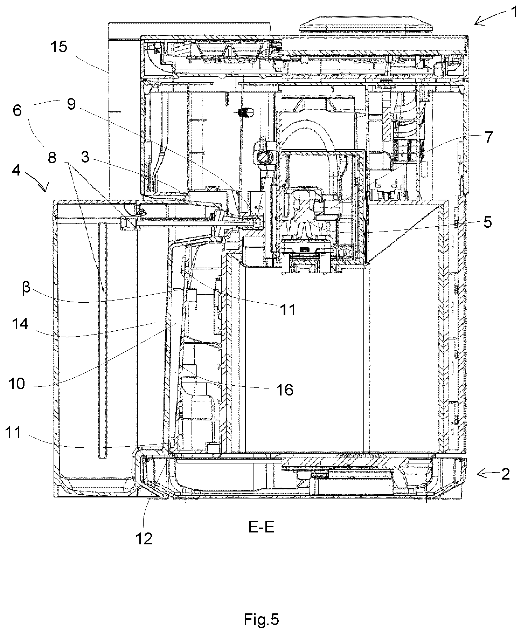

Reference is made to Fig. 2 to 5 they present views of a full automatic coffee machine with the preferred embodiment of the present invention as shown in Fig. 1 and additionally equipped with the milk container 4. Full automatic coffee machine, comprising a housing 1, a water tank 15, a brewing unit (not shown on this figure), a heating unit (not shown on this figure), a drip tray 2, a port 3 arranged in the housing 1 for fluidly connecting a milk container 4, and a frothing device 5 by a milk suction line 6. The milk container 4 is successfully docked in the port 3, so tight connection in the milk suction line 6 was achieved. The venturi geometry is provided in the frothing device 5 to generate negative pressure inside the milk suction line 6 by a steam provided to the frothing device 5 within a steam conduit 7. The milk suction line includes a first tube 8 inserted into the milk container 4 and a second tube 9 which is placed in the housing 1 and connected to the frothing device 5. The housing 1 has a drainage guiding groove 10 which is arranged on the lateral side of the housing 1. The Said groove fluidly connecting the port 3 with the drip tray 2. The drainage guiding groove 10 is equipped with two ribs 11, limiting a transverse surface of the drainage guiding groove 10. They are arranged at an angle α about 60 degrees with respect to the axis defined by the drainage guiding groove 10. Furtherly the drainage guiding groove 10 that on its whole length is in a form of a longitudinal recess arranged vertically in the housing 1, starts from the port 3, and the port 3 is above the drip tray and the drainage guiding groove 10 ends with a retaining wall 12, which has an opening 13 that is fluidly connected with the drip tray the width of the drainage guiding groove 10 changes linearly along the axis defined by the drainage guiding groove 10. The drainage guiding groove 10 has a bottom 16 portion which is deviated from the vertical by an angle β at about 3 degrees, therefore the depth of the drainage guiding groove changes linearly along the axis defined by the drainage guiding groove. At the starting point, at the port 3 the drainage guiding groove 10 is deeper than at the end, at the supporting wall 11. Ribs 11 are arranged on the bottom 16. The drainage guiding groove 10 is completely covered by the side wall 14 of the milk container 4 while the milk container 4 is docked with the port 3.

When the full automatic coffee machine according to the present invention foams milk for preparing i.e. cappuccino, then the steam provided from the steam conduit to the venturi geometry, which is placed in the frothing device and which is connected to the milk suction line, causes negative pressure in the milk suction line, therefore milk is sucked from the milk container to the frothing device where is frothed. Whereas, during cleaning process of the milk suction line and the frothing device, hot water flows in the opposite direction namely to the milk container. Therefore if the milk container is disconnected, water could flow out through the port and would flood surroundings, but the drainage guiding groove prevents from that hazard because water leaking from the port flows along the drainage guiding groove to the drip tray. There is opening in the retaining wall for receiving water from the drainage guiding groove. Furtherly when the milk container is successfully docked in the port, the drainage guiding groove is wholly covered by side walls of the milk container. The water is collected in the drip tray, that is dedicated for collecting wasted water, and that is frequently emptying by the user.

List of reference signs.
1 housing
2 drip tray
3 port
4 milk container
5 frothing device
6 milk suction line
7 steam conduit
8 first tube
9 second tube
10 drainage guiding groove
11 rib
12 retaining wall
13 opening
14 side wall
15 water tank
16 bottom

## Claims

1. Full automatic coffee machine, comprising a housing (1), a water tank, a brewing unit, a heating unit, a drip tray (2), a port (3) arranged in the housing (1) for connecting a milk container (4), and a frothing device (5), and when the milk container (4) is connected to the port (3) the frothing device (4) is fluidly communicated with the milk container (4) by a milk suction line (6) which includes a first tube (8) inserted into the milk container (4) and a second tube (9) connected to the frothing device (5), the coffee machine also comprises a steam conduit (7) that provides a steam to the frothing device (5) to generate negative pressure inside the milk suction line (6) **characterized by** a drainage guiding groove (10) which is arranged on the lateral side of the housing (1) fluidly connecting the port (3) with the drip tray (2), and in that the drainage guiding groove (10) is at least partially covered by a side wall (14) of the milk container (4) while the milk container (4) is docked with the port (3).

2. Coffee machine in accordance with claim 1, **characterized in that**, the drainage guiding groove (10) is equipped with at least one rib (11), limiting a transverse surface of the drainage guiding groove (10).

3. Coffee machine in accordance with claim 2, **characterized in that**, the drainage guiding groove (10) is equipped with at least one rib (11), that is arranged at an acute angle α with respect to the axis defined by the drainage guiding groove (10).

4. Coffee machine in accordance with claim 3, **characterized in that**, the drainage guiding groove (10) is equipped with two ribs (11), which are arranged at the angle α between about 50 to 70 degrees with respect to the axis defined by the drainage guiding groove (10).

5. Coffee machine in accordance with any claims from 1 to 4, **characterized in that**, the drainage guiding groove (10) starts from the port (3), and **in that** the port (3) is above the drip tray (2).

6. Coffee machine in accordance with any of preceding claims, **characterized in that**, the drainage guiding groove (10) ends with a retaining wall (12) with an opening (13) that is fluidly connected with the drip tray (2).

7. Coffee machine in accordance with any of preceding claims, **characterized in that**, the drainage guiding groove (10) on its whole length is in a form of a longitudinal recess arranged vertically in the housing (1).

8. Coffee machine in accordance with any of preceding claims, **characterized in that**, the drainage guiding groove (10) on its whole length has a fixed width.

9. Coffee machine in accordance with any of claims 1 to 7, **characterized in that**, the width of the drainage guiding groove (10) changes linearly along the axis defined by the drainage guiding groove (10).

10. Coffee machine in accordance with any of preceding claims, **characterized in that**, the drainage guiding groove (10) is completely covered by the side wall (14) of the milk container (4) while the milk container (4) is docked with the port (3).

11. Coffee machine in accordance with any of preceding claims, **characterized in that**, the drainage guiding groove (10) has a bottom portion (16) which is deviated from the vertical by an angle β.

## Patentansprüche

1. Kaffeevollautomat, der ein Gehäuse (1), einen Wassertank, eine Brüheinheit, eine Heizeinheit, eine Abtropfschale (2), einen in dem Gehäuse (1) angeordneten Anschluss (3) zum Anschließen eines Milchbehälters (4) und eine Aufschäumvorrichtung (5) umfasst, die, wenn der Milchbehälter (4) an den Anschluss (3) angeschlossen ist, über eine Milchansaugleitung (6) mit dem Milchbehälter (4) fluidverbunden ist, welche einen ersten Schlauch (8), der in den Milchbehälter (4) eingeführt wird, und einen zweiten Schlauch (9) aufweist, der an die Aufschäumvorrichtung (5) angeschlossen ist, wobei die Kaffeemaschine auch eine Dampfleitung (7) umfasst, die Dampf für die Aufschäumvorrichtung (5) bereitstellt und so in der Milchansaugleitung (6) einen Unterdruck erzeugt, **gekennzeichnet durch** eine Ablaufrinne (10), die an der Seite des Gehäuses (1) angeordnet ist und den Anschluss (3) mit der Abtropfschale (2) fluidverbindet, und **dadurch, dass** die Ablaufrinne (10) zumindest teilweise von einer Seitenwand (14) des Milchbehälters (4) abgedeckt ist, wenn dieser an den Anschluss (3) angeschlossen ist.

2. Kaffeeautomat nach Anspruch 1, **dadurch gekennzeichnet, dass** die Ablaufrinne (10) mit mindestens einer Rippe (11) ausgestattet ist, die eine quer verlaufende Fläche der Ablaufrinne (10) begrenzt.

3. Kaffeeautomat nach Anspruch 2, **dadurch gekennzeichnet, dass** die Ablaufrinne (10) mit mindestens einer Rippe (11) ausgestattet ist, die in einem spitzen Winkel α in Bezug auf die Achse angeordnet ist, die von der Ablaufrinne (10) definiert wird.

4. Kaffeeautomat nach Anspruch 3, **dadurch gekennzeichnet, dass** die Ablaufrinne (10) mit zwei Rippen (11) ausgestattet ist, die in einem Winkel α von etwa 50 bis 70 Grad in Bezug auf die Achse angeordnet sind, die von der Ablaufrinne (10) definiert wird.

5. Kaffeeautomat nach einem der Ansprüche 1 bis 4, **dadurch gekennzeichnet, dass** die Ablaufrinne (10) an dem Anschluss (3) beginnt und sich der Anschluss (3) über der Abtropfschale (2) befindet.

6. Kaffeeautomat nach einem der vorhergehenden Ansprüche, **dadurch gekennzeichnet, dass** die Ablaufrinne (10) an einer Haltewand (12) mit einer Öffnung (13) endet, die mit der Abtropfschale (2) fluidverbunden ist.

7. Kaffeeautomat nach einem der vorhergehenden Ansprüche, **dadurch gekennzeichnet, dass** die Ablaufrinne (10) über ihre gesamte Länge die Form einer längs verlaufenden Vertiefung aufweist, die vertikal in dem Gehäuse (1) angeordnet ist.

8. Kaffeeautomat nach einem der vorhergehenden Ansprüche, **dadurch gekennzeichnet, dass** die Ablaufrinne (10) über ihre gesamte Länge eine feste Breite aufweist.

9. Kaffeeautomat nach einem der Ansprüche 1 bis 7, **dadurch gekennzeichnet, dass** sich die Breite der Ablaufrinne (10) entlang der von ihr definierten Achse linear ändert.

10. Kaffeeautomat nach einem der vorhergehenden Ansprüche, **dadurch gekennzeichnet, dass** die Ablaufrinne (10) vollständig von der Seitenwand (14) des Milchbehälters (4) abgedeckt ist, wenn dieser an den Anschluss (3) angeschlossen ist.

11. Kaffeeautomat nach einem der vorhergehenden Ansprüche, **dadurch gekennzeichnet, dass** die Ablaufrinne (10) einen unteren Abschnitt (16) aufweist, der um einen Winkel β von der Vertikalen abweicht.

## Revendications

1. Machine à café intégralement automatique, comprenant un boîtier (1), un réservoir à eau, une unité de brassage, une unité de chauffe, un égouttoir (2), un orifice (3) disposé dans le boîtier (1) pour raccorder un contenant à lait (4), et un dispositif de moussage (5), et lorsque le contenant à lait (4) est raccordé à l'orifice (3) le dispositif de moussage (4) est en communication fluidique avec le contenant à lait (4) via une ligne d'aspiration de lait (6) qui comprend un premier tube (8) inséré à l'intérieur du contenant à lait (4) et un deuxième tube (9) raccordé au dispositif de moussage (5), la machine à café comprenant également une conduite de vapeur (7) qui alimente le dispositif de moussage (5) en vapeur pour générer une pression négative à l'intérieur de la ligne d'aspiration de lait (6), **caractérisée par** une rainure de guidage de drainage (10) disposée sur le côté latéral du boîtier (1) raccordant fluidiquement l'orifice (3) à l'égouttoir (2), et en ce que la rainure de guidage de drainage (10) est au moins partiellement couverte par une paroi latérale (14) du contenant à lait (4) tandis que le contenant à lait (4) est fixé à l'orifice (3).

2. Machine à café selon la revendication 1, **caractérisée en ce que** la rainure de guidage de drainage (10) est équipée d'au moins une nervure (11) limitant une surface transversale de la rainure de guidage de drainage (10).

3. Machine à café selon la revendication 2, **caractérisée en ce que** la rainure de guidage de drainage (10) est équipée d'au moins une nervure (11) disposée selon un angle aigu a par rapport à l'axe défini par la rainure de guidage de drainage (10).

4. Machine à café selon la revendication 3, **caractérisée en ce que** la rainure de guidage de drainage (10) est équipée de deux nervures (11) disposées selon un angle α entre environ 50 à 70 degrés par rapport à l'axe défini par la rainure de guidage de drainage (10).

5. Machine à café selon l'une quelconque des revendications 1 à 4, **caractérisée en ce que** la rainure de guidage de drainage (10) démarre de l'orifice (3) et **en ce que** l'orifice (3) se trouve au-dessus de l'égouttoir (2).

6. Machine à café selon l'une quelconque des revendications précédentes, **caractérisée en ce que** la rainure de guidage de drainage (10) se termine par une paroi de retenue (12) avec une ouverture (13) fluidiquement raccordée à l'égouttoir (2).

7. Machine à café selon l'une quelconque des revendications précédentes, **caractérisée en ce que** la rainure de guidage de drainage (10) a, sur toute sa longueur, la forme d'un évidement longitudinal disposé verticalement dans le boîtier (1).

8. Machine à café selon l'une quelconque des revendications précédentes, **caractérisée en ce que** la rainure de guidage de drainage (10) possède une largeur fixe sur toute sa longueur.

9. Machine à café selon l'une quelconque des revendications 1 à 7, **caractérisée en ce que** la largeur de la rainure de guidage de drainage (10) varie linéairement le long de l'axe défini par la rainure de guidage de drainage (10).

10. Machine à café selon l'une quelconque des revendications précédentes, **caractérisée en ce que** la rainure de guidage de drainage (10) est intégralement couverte par la paroi latérale (14) du contenant à lait (4) tandis que le contenant à lait (4) est fixé à l'orifice (3).

11. Machine à café selon l'une quelconque des revendications précédentes, **caractérisée en ce que** la rainure de guidage de drainage (10) possède une partie inférieure (16) déviée de la verticale selon un angle β.
